Europäisches Patentamt

European Patent Office

Office européen des brevets

(11) Publication number: **0 257 910 B1**

# EUROPEAN PATENT SPECIFICATION

(45) Date of publication of the patent specification: **17.10.90**

(51) Int. Cl.⁵: **G01G 17/04, G01G 23/14**

(21) Application number: **87307100.5**

(22) Date of filing: **11.08.87**

(54) Direct weighing of liquid handling plant.

(30) Priority: **21.08.86 GB 8620360**

(43) Date of publication of application:
**02.03.88 Bulletin 88/9**

(45) Publication of the grant of the patent:
**17.10.90 Bulletin 90/42**

(84) Designated Contracting States:
**BE DE FR GB**

(56) References cited:
**DE-A- 2 913 491**
**DE-C- 634 128**
**GB-A- 2 087 080**
**US-A- 3 812 723**

(73) Proprietor: **UNITED KINGDOM ATOMIC ENERGY AUTHORITY, 11 Charles II Street, London SW1Y 4QP(GB)**

(72) Inventor: **Ford, Lionel Houston, 44 Riverside Drive Hambleton, Blackpool Lancashire(GB)**
Inventor: **Oruh, Samuel Nduka, 25 Whitecoats Drive, Lytham Lancashire(GB)**
Inventor: **Singh, Jaswant, Wallace Farm Wallace Lane, Forton Lancashire(GB)**
Inventor: **Coldwell, Geoffrey Stewart, 43 Dodney Drive Lea, Preston Lancashire(GB)**

(74) Representative: **Alderman, John Edward et al, United Kingdom Atomic Energy Authority Patents Branch B.329 Harwell Laboratory, Oxon OX11 ORA(GB)**

ACTORUM AG

## Description

This invention relates to nuclear fuel reprocessing plant. In such plant, there is usually a requirement to monitor parameters such as the density or composition of liquids. The present invention involves the use of direct weighing to enable measurements of such parameters to be made.

Examples of direct weighing systems are described in German Patent Specification A1-2913491 and British Patent Specification No 2087080A. In German A1-2913491, a u-shaped pipeline is shown which is supported at its open end on pivots and is supported at its closed end by a weighing device at a location spaced from the pivots. In British 2913491 a fuel reservoir for an internal combustion engine is suspended from a load cell so as to determine the quantity of fuel in the reservoir by direct weighing of the reservoir.

Neither of the aforesaid examples is concerned with the problems associated with the radioactive environment of a nuclear reprocessing plant in which there is a need for the accountancy of plutonium and uranium contents of liquors derived from the dissolution of nuclear fuel materials in nitric acid in the course of nuclear fuel reprocessing. Such liquor is supplied to an accountancy tank from which samples are periodically extracted (following mixing of the contents of the tank) for analysis to determine plutonium/uranium concentrations.

Hitherto, calculations of the total plutonium/uranium content have been effected by determining the volume of liquor in the tank by using pneumercators to measure liquor level and density to enable an indirect value to be derived for the weight of the tank contents.

The present invention therefore provides a nuclear fuel reprocessing plant for handling fissile material-bearing liquor, and comprising a plurality of pipework sections each of retroverted configuration and extending generally horizontally in cantilever fashion at one end thereof from a respective support and at the other end thereof being supported from a null deflection weighing system spaced from the support, characterized in that the pipework sections at said other ends thereof are connected to an accountancy tank and at said one ends thereof being rigidly attached to the supports so as to substantially isolate the tank from the remaining plant in terms of force transmission between the tank and the pipework sections, and the remaining plant, the accountancy tank being located within a containment, and the weighing system being located externally of the containment above the roof thereof and coupled to the tank by tie rod members extending through the roof so as to support the tank.

Desirably, each pipework section is rigidly attached to said respective support by a pair of clamping devices associated with a respective pipework section, the devices being located immediately adjacent to one another.

Preferably, the rod members above the roof locate one each side of the system, and are coupled to a cross-member located above the system, the cross-member being arranged to seat on the system so as to support the tank.

Advantageously, the pipework sections are orientated and arranged such that they compensate for one another in terms of thermal expansion, whereby horizontal displacement of the tank is minimised.

The invention will be further described by way of example only with reference to the accompanying drawings, in which:

Figure 1 is a diagrammatic front elevational view of a weighbridge-supported accountancy tank forming part of a nuclear fuel processing plant; and

Figure 2 is a schematic perspective view of a null deflection weighbridge.

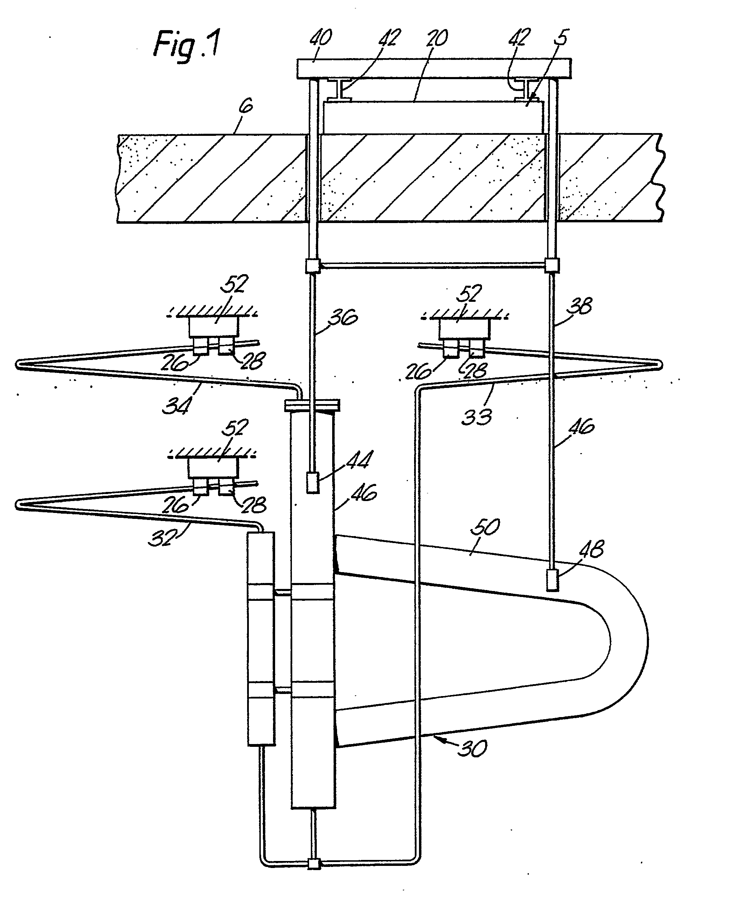

Referring now to Figure 1, there is shown the harp-shaped accountancy tank 30 of a nuclear fuel reprocessing plant, the tank being connected to the remaining plant by various sections of pipework (only some of which are illustrated and depicted by reference numerals 32, 33, 34) for use in filling and emptying the tank, agitating its contents and extracting and returning samples for analysis. To enable the plutonium/uranium contents present in feed liquors to be determined, the tank 30 is coupled to a weighbridge 5 through two sets of tie rods 36, 38, crossmember 40 and H-section bearers 42 which seat on the platform 20 of the weighbridge. The tie rods 36 are connected to brackets or lugs 44 on opposite sides of the vertical limb 46 of the tank while the tie rods 38 are coupled to brackets or lugs 48 on opposite sides of the U-shaped side limb 50 of the tank. The connections between each tie rod 36, 38 and crossmember 40 may be made via knife edges (not shown).

All of the pipework sections, eg. 32, 33, 34, connecting the tank 30 to the remaining part of the plant are formed with a retroverted cantilever configuration, eg. as generally horizontally disposed hairpin sections, with one end connected to the accountancy tank unit and their opposite ends rigidly clamped by double clamp arrangements 26, 28 to fixed structure 52. The pipework sections extend beyond the clamping arrangements to provide continuity with the remainder of the plant but in such a way that the accountancy tank unit and associated pipework sections, eg. 32, 33, 34, are substantially isolated from the remaining plant in terms of force transmission. Although only three pipework sections 32, 33, 34 are illustrated, in practice there will usually be seven such pipework sections all of a cantilevered retroverted configuration and they are conveniently orientated and designed in such a way that they tend to compensate for one another in terms of thermal expansion effects, ie so that the net horizontal displacement of the accountancy tank as a result of thermal expansion of the pipework sections is minimised. In practice, the accountancy tank unit is initially suspended from the weighbridge prior to effecting the connections with the remaining plant so that pipework sections can be connected to the remaining plant in such a way that they are substantially unstressed.

2

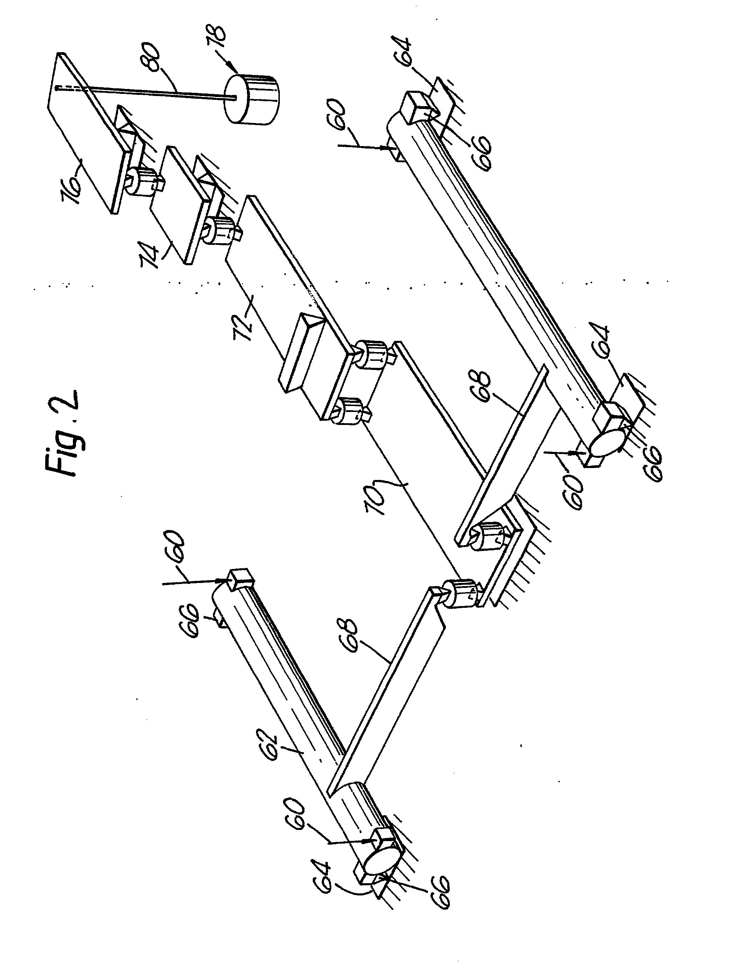

Figure 2 illustrates one form of null deflection weighbridge which may be employed in the embodiment shown in Figure 1. A feature of the weighbridge is that its load receiver, platform 20, does not undergo any significant displacement as the applied load changes, since the applied load is counterbalanced by an opposing force which, in the illustrated embodiment, is generated electromagnetically and amplified by a mechanical lever system. The load receiver, platform 20, acts at points 60 on a pair of spaced parallel torque tubes 62 mounted on fixed surfaces 64 by knife edge fulcrums 66. The torque loading applied via points 60 is transmitted via transverse lever arms 68 rigidly connected to the torque arms 62 to a lever system comprising levers 70, 72, 74, 76. Lever 76 is connected to an electromagnetic actuator 78 which may comprise a fixed magnet and a coil movable with rod 80, the force exerted by the actuator 78 being controllable according to the electrical current supplied to the coil. Thus, by supplying the actuator with electrical current of appropriate magnitude, the load applied to the weighbridge can be counterbalanced and the value of the current necessary for this purpose provides a measure of the applied load. In practice, a sensor arrangement is provided to detect any displacement as a result of the applied load, eg. the sensor may monitor the position of the rod 80, and any displacement is immediately compensated for by a feedback system which varies the current supply to the actuator 78 to restore the rod 80 to a predetermined position and hence counterbalance the load applied to the weighbridge.

## Claims

1. Nuclear fuel reprocessing plant for handling flssile material-bearing liquor, and comprising a plurality of pipework sections (32, 33, 34) each of retroverted configuration and extending generally horizontally in cantilever fashion at one end thereof from a respective support (52) and at the other end thereof being supported from a null deflection weighing system (5) spaced from the support (52), characterised in that the pipework sections (32, 33, 34) at said other ends thereof are connected to an accountancy tank (30) and at said one ends thereof are rigidly attached to the supports (52) so as to substantially isolate the tank (30) from the remaining plant in terms of force transmission between the tank and the pipework sections (32, 33, 34), and the remaining plant, the accountancy tank (30) is located within a containment, and the weighing system (5) is located externally of the containment above the roof (6) thereof, the system (5) being coupled to the tank (30) by tie rod members (36, 38) extending through the roof (6) so as to support the tank (30).

2. A plant as claimed in Claim 1, wherein each pipework section (32, 33, 34) is rigidly attached to said respective support (52) by a pair of clamping devices (26, 28) associated with a respective pipework section (32, 33, 34), the devices (26, 28) being located immediately adjacent to one another.

3. A plant as claimed in Claim 1 or Claim 2 wherein the rod members (36, 38) above the roof (6) locate one each side of the weighing system (5), and are coupled to a cross-member (40, 42) located above the weighing system (5), the cross-member (40, 42) being arranged to seat on the weighing system (5) to support the tank (30).

4. A plant as claimed in any one of Claims 1 to 3, wherein the tank (30) is of harp-shaped form.

5. A plant as claimed in any one of Claims 1 to 4, wherein the pipework sections (32, 33, 34) are orientated and arranged such that they compensate for one another in terms of thermal expansion, whereby horizontal displacement of the tank (30) is minimised.

## Patentansprüche

1. Kernbrennstoff-Wiederaufbereitungsanlage zur Handhabung von spaltbares Material enthaltender Flüssigkeit, und mit einer Anzahl von Verrohrungsabschnitten (32, 33, 34) mit jeweils umgeknickter Ausbildung, die sich insgesamt horizontal überstehend mit ihrem einen Ende von einer jeweiligen Abstützung (52) her erstrecken und mit ihrem anderen Ende von einem auslenkungsfreien Wiegesystem (5) abgestützt sind, das einen Abstand zur Abstützung (52) aufweist, dadurch gekennzeichnet, daß die Verrohrungsabschnitte (32, 33, 34) an ihren genannten anderen Enden mit einem Registriertank (30) verbunden sind und an ihren genannten einen Enden starr an den Abstützungen (52) angebracht sind, so daß sie den Tank (30) im wesentlichen gegenüber der verbleichenden Anlage im Sinne der Kraftübertragung zwischen dem Tank und den Verrohrungsabschnitten (32, 33, 34) isolieren, wobei der Registriertank (30) innerhalb eines Behälters angeordnet ist und das Wiegesystem (5) außerhalb des Behälters oberhalb dessen Daches (6) angeordnet ist, und wobei das System (5) an den Tank (30) durch Verbindungsstangenteile (36, 38) angekoppelt ist, die sich durch das Dach erstrecken, um den Tank (30) abzustützen.

2. Anlage nach Anspruch 1, worin jeder Verrohrungsabschnitt (32, 33, 34) an der jeweiligen Abstützung (52) durch ein Paar Spannvorrichtungen (26, 28) starr angebracht ist, die einem jeweiligen Verrohrungsabschnitt (32, 33, 34) zugeordnet sind, wobei die Vorrichtungen (26, 28) umittelbar nebeneinanderliegend angeordnet sind.

3. Anlage nach Anspruch 1 oder Anspruch 2, worin die Stangenteile (36, 38) oberhalb des Daches (6) eines an jeder Seite des Wiegesystems (5) anordnen und an ein Querteil (40, 42) angekoppelt sind, das oberhalb des Wiegesystems (5) angeordnet ist, wobei das Querteil (40, 42) so angeordnet ist, daß es auf dem Wiegesystem (5) aufsitzt, um den Tank (30) abzustützen.

4. Anlage nach einem der Ansprüche 1 bis 3, worin der Tank (30) eine harfenförmige Gestalt aufweist.

5. Anlage nach einem der Ansprüche 1 bis 4, worin die Verrohrungsabschnitte (32, 33, 34) so ausgerichtet und angeordnet sind, daß sie einander im Sinne der Wärmedehnung kompensieren, wobei die horizontale Verlagerung des Tankes (30) auf ein Mindestmaß verringert ist.

## Revendications

1. Installation de retraitement de combustible nucléaire, destinée à traiter de la liqueur comportant de la matière fissile, cette installation comprenant plusieurs tronçons (32, 33, 34) de tuyauterie ayant chacun une configuration en rétroversion et s'étendant de manière généralement horizontale en porte-à-faux en étant encastré à une de ses extrémités, à partir d'un support (52) respectif et en étant supporté à son autre extrémité par un système (5) de pesage à déflexion nulle, système espacé des supports (52), installation caractérisée en ce que les tronçons (32, 33, 34) de tuyauterie sont connectés, par leurs autres extrémités, à une cuve ou à un réservoir (30) "de comptabilité" et auxdites extrémités, ces tronçons sont rigidement fixés aux supports (52) de manière à isoler quasi-totalement la cuve ou réservoir (30) du reste de l'installation, en termes de transmission des forces entre la cuve et les tronçons (32, 33, 34) de tuyauterie, et le reste de l'installation, en ce que la cuve ou réservoir (30) "de comptabilité " est situé au sein d'une enceinte ou enveloppe de sécurité, et en ce que le système (5) de pesage est situé à l'extérieur de l'enveloppe de sécurité au-dessus du toit (6) de cette enveloppe, le système (5) étant couplé à la cuve (30) par des éléments (36, 38) de type tirants, s'étendant à travers le toit (6) de manière à supporter la cuve (30).

2. Installation telle que revendiquée à la revendication 1, dans laquelle chaque tronçon (32, 33, 34) de tuyauterie est rigidement relié audit support (52) respectif par une paire de dispositifs (26, 28) de serrage, associée à un tronçon (32, 33, 34) respectif de tuyauterie, les dispositifs (26, 28) étant situés au voisinage immédiat l'un de l'autre.

3. Installation telle que revendiquée à la revendication 1 ou à la revendication 2, dans laquelle les tirants (36, 38) situés au-dessus du toit (6) se situent chacun d'un côté du système (5) de pesage, et sont accouplés à un élément transversal ou traverse (40, 42), situé au-dessus du système (5) de pesage, la traverse (40, 42) étant agencée de manière à reposer sur le système (5) de pesage afin de supporter la cuve ou réservoir (30).

4. Installation telle que revendiquée dans l'une quelconque des revendications 1 à 3, dans laquelle la cuve ou réservoir (30) a une forme de harpe.

5. Installation telle que revendiquée dans l'une quelconque des revendications 1 à 4, dans laquelle les tronçons (32, 34) de tuyauterie sont orientés et agencés de manière à compenser mutuellement leur dilatation thermique respective, de façon à réduire à son minimum le déplacement horizontal du réservoir ou cuve (30).

Fig.1

Fig.2

EP 0 257 910 B1